# EUROPÄISCHE PATENTSCHRIFT

(11) **EP 0 718 423 B1**
(45) Veröffentlichungstag und Bekanntmachung des Hinweises auf die Patenterteilung: **21.07.1999**
(21) Anmeldenummer: 95115907.8
(22) Anmeldetag: 10.10.1995
(51) Int. Cl.: D01H 4/12

(54) **Lagerung für einen Offenend-Spinnrotor**
Bearing for an open-end spinning rotor
Palier pour un rotor de filage à bout libre

(30) Priorität: 21.12.1994 DE 4445739
(43) Veröffentlichungstag der Anmeldung: 26.06.1996
(73) Patentinhaber: W. SCHLAFHORST AG & CO., D-41061 Mönchengladbach (DE)
(72) Erfinder: Preutenborbeck, Maximilian, D-41065 Mönchengladbach (DE); Schlömer, Bert, D-52525 Heinsberg (DE); Pyra, Michael, Dr.-Ing., D-41379 Brüggen (DE); Helbig, Volker, D-41812 Erkelenz (DE)

(56) Entgegenhaltungen:
- DE-A- 2 634 070
- DE-A- 3 047 606
- DE-A- 4 022 562
- FR-A- 2 384 043
- US-A- 5 126 610

## Beschreibung

Die Erfindung betrifft eine Lagerung für einen Offenend-Spinnrotor, dessen Schaft radial in den von mindestens einem Stützrollenpaar gebildeten Keilspalt und axial mittels eines Magnetsystems gelagert wird, wobei ein auf dem Schaft angeordneter Magnet gegenüber einem im Rotorgehäuse angeordneten Magneten so angeordnet ist, daß sich gleichsinnige Magnetpole gegenüberliegen.

Bei Offenend-Spinnrotoren ist es bekannt, den Schaft radial in den von Stützrollenpaaren gebildeten Keilspalt zu lagern. Damit ist es möglich, einen Rotorschaft selbst bei sehr hohen Drehzahlen sicher zu lagern. Mittels einer Schränkung der Achsen der Stützrollenpaare wird ein Axialschub auf den Rotorschaft ausgeübt, der in Richtung auf das dem Rotor abgewandte Ende des Schaftes wirkt, um den Rotor selbst bei hohen Drehzahlen sicher zu lagern. Um die Axialkräfte auffangen zu können, ist beispielsweise die Lagerung der Stirnseite des Schafts auf einer Kugel bekannt, wie sie in der DE 25 14 734 C2 beschrieben ist.

Eine solche Lagerung ist verschleißbehaftet.

Es sind deshalb bereits Vorschläge gemacht worden, die Axiallagerung eines Rotorschaftes zu vereinfachen.

Aus der DE 26 34 070 C3 ist es bekannt, die axiale Fixierung eines Rotorschafts mit einem Magnetlager vorzunehmen. Die am Ende des Schaftes angeordneten Permanentmagnete sind axial magnetisiert und unter Beibehaltung des Schaftdurchmessers die dem Pol zugeordneten scheibenförmigen Polschuhe gleichpolig einander zugekehrt festgelegt.

Die axiale Fixierung des Rotorschaftes ist bei der vorgenannten Anordnung der Magnete nicht so stabil wie bei der in der gattungegemäßen DE-OS 26 39 763 vorgeschlagenen Anordnung. Dort sind die Magnete so angeordnet, daß sie sich mit im wesentlichen radial gerichteten, gleichnamige Magnetpole enthaltenen Flächen mit axialem Abstand gegenüberliegen und wobei wenigstens zwei Flächen parallel so angeordnet sind, daß sich der axiale Abstand der Flächen der Flächenpaare bei einer axialen Bewegung des Schaftes gegensinnig ändert. Bei der in dieser Schrift vorgeschlagenen Magnetlagerung kann der Rotorschaft nur ausgebaut werden, wenn das Lager entweder demontiert wird oder durch einen konstruktiv aufwendigen Mechanismus geöffnet wird.

Aufgabe der vorliegenden Erfindung ist es, den Ausbeziehungsweise Einbau von Rotoren bei Magnetlagern zu vereinfachen.

Die Lösung dieser Aufgabe erfolgt mit Hilfe der kennzeichnenden Merkmale des Anspruchs 1.

Die Magnete zur axialen Lagerung des Rotors sind auf dessen Schaft, an dem Ende des Schafts, außerhalb der Lagerelemente für die radiale Lagerung, angeordnet. Dadurch besteht eine räumliche Trennung zwischen der radialen und der axialen Lagerung. Die Zugänglichkeit zu den beiden Lagerungen wird dadurch erleichtert und die baulichen Abmessungen der Stützrollenlagerung braucht nicht geändert zu werden. Die Magnetlagerung tritt an die Stelle der bekannten Schaftlagerung mittels eines Spurlagers, wie es aus der DE 25 14 734 C2 bekannt ist.

Da die Magnetkräfte innerhalb des Magnetlagers zur axialen Fixierung des Rotorschaftes groß genug sind, um eine axiale Verschiebung während des Spinnbetriebs zu verhindern, ist es auch nicht mehr erforderlich, eine Schränkung der Achsen der Stützrollenpaare vorzunehmen. Die Achsen der Stützrollen können aufgrund der Magnetlagerung parallel angeordnet werden, so daß der bei der Spurlagerung durch die Stützrollen auf den Rotorschaft aufgezwungene Axialschub entfällt. Das Entfallen des herkömmlichen, dem Rotorschaft aufgezwungenen Axialschubs kann bei der Dimensionierung der Magnetlagerung berücksichtigt werden. Die Magnetlagerung braucht aufgrund des entfallenden Axialschubs weniger Axialkräfte aufzunehmen als eine herkömmliche Lagerung des Rotorschaftendes mittels einer Kugel. Die Reibung zwischen Rotorschaft und dem Belag der Stützscheiben ist aufgrund des entfallenden Axialschubs ebenfalls wesentlich geringer. Dadurch können härtere Beläge auf den Stützscheiben aufgebracht werden, die wiederum wesentlich höhere Rotordrehzahlen zulassen.

Die erfindungsgemäß lösbare Verbindung zwischen Schaft und Magneten kann sowohl eine kraftschlüssige als auch eine formschlüssige Verbindung sein.

Bei kraftschlüssigen Verbindungen bietet sich sowohl eine Reibkupplung als auch eine Fliehkraftkupplung an. Beide lassen sich bei Stillstand des Rotorschafts lösen. Bei einer Reibkupplung muß die Reibung zwischen dem Rotorschaft und einer Buchse, auf dem der dem Rotorschaft zugeordnete Magnet angeordnet ist, einerseits so groß sein, daß der in die Buchse eingeführte Rotorschaft bei Drehung den dem Rotorschaft zugeordneten Magnet mitnimmt, andererseits muß sich die Verbindung durch einfaches Herausziehen des Rotorschaftes aus der Lagerung wieder lösen lassen. Das Magnetsystem kann auch so aufgebaut sein, daß der Schaft zwei oder mehr der ringförmigen Magnete trägt, wobei die Magnete jeweils so beabstandet voneinander sind, daß die im Gehäuse angeordneten Magnete in die Zwischenräume tauchen.

Eine weitere Ausgestaltung der kraftschlüssigen Verbindung ist die Fliehkraftkupplung. Erst wenn der Rotorschaft eine bestimmte Drehzahl überschritten hat, wird der ihm zugeordnete Magnet ebenfalls in Rotation versetzt. Eine Fliehkraftkupplung der erfindungsgemäßen Lagerung ist einfach im Aufbau, wie anhand eines Ausführungsbeispiels noch erläutert wird.

In einer anderen Ausgestaltung der Erfindung besteht die lösbare Verbindung zwischen Schaft und Magnet aus einer formschlüssigen Verbindung. Diese kann beispielsweise ein Bajonettverschluß sein. Ein Bajonettverschluß bietet eine sichere und doch leicht lösbare Verbindung zwischen Magnet und dem Rotorschaft.

Denkbar ist auch, die Verbindung von Magnet und Rotorschaft mittels einer Rastverbindung. Die Mitnahme des gekuppelten Teils kann beispielsweise durch Federzungen oder Kugeln erfolgen, welche an ihm in vorgesehenen Vertiefungen einrasten.

Eine wirtschaftliche Lösung der lösbaren Verbindungen wird dadurch erreicht, daß die die lösbare Verbindung herstellenden mechanischen Elemente an dem dem Rotorschaft zugeordneten Magnet angeordnet sind, so daß beim Lösen der Verbindung zwischen Rotorschaft und Magnet der Magnet in der Lagerung verbleibt. Der Rotorschaft braucht deshalb beispeilsweise nur Vertiefungen oder Ausnehmungen aufzuweisen, in welche die die Verbindung herstellenden Elemente eingreifen. Beispielsweise sind für einen Bajonettverschluß in einen Rotorschaft nur die Vertiefung einzubringen sowie der Schlitz, mit dem der Stift des in die Vertiefung einstoßenden Schafthalters mit diesem formschlüssig verbunden wird. Bei einer Fliekraftkupplung ist die Umkehrung der Anordnung der Kupplungselemente nicht möglich. Bei einer Reibkupplung können die Reibelemente an dem dem Rotorschaft zugeordneten Magnet angeordnet sein, so daß der Rotorschaft nur eine Ausnehmung aufzuweisen braucht, in die die Reibelemente eintauchen.

Bei einem Rotorwechsel ist es deshalb nicht erforderlich, daß die zur Kupplung beitragenden mechanischen Elemente mit ausgewechselt werden müssen. Sie verbleiben im Lager. Die Herstellung der Rotorschäfte vereinfacht und verbilligt sich dadurch.

Anhand von Ausführungsbeispielen wird die Erfindung näher erläutert.

Es zeigen:
Fig. 1 eine Seitenansicht der erfindungsgemäßen Lagerung im Schnitt mit einem Beispiel für eine kraftschlüssige Verbindung, eine Klemmverbindung als Reibkupplung,
Fig. 1a die Klemmglieder am Ende des Rotorschafts, im vergrößertem Maßstab,
Fig.2 eine Fliehkraftkupplung als weiteres Beispiel für eine kraftschlüssige Verbindung,
Fig. 2a die Fliehkraftkupplung im Ruhezustand,
Fig. 2b die Fliehkraftkupplung im Mitnahmezustand,
Fig. 3 einen Bajonettverschluß als Beispiel für eine formschlüssige Verbindung,
Fig. 3a eine Ansicht der Kupplung,
Fig. 4 eine Vierkantsteckverbindung mit einer Kugelschnappverbindung, als Rastverbindung,
Fig. 4a eine Kugelschnappverbindung als Einzelheit und
Fig. 5 eine Umkehrung der Anordnung der Kupplungselemente.

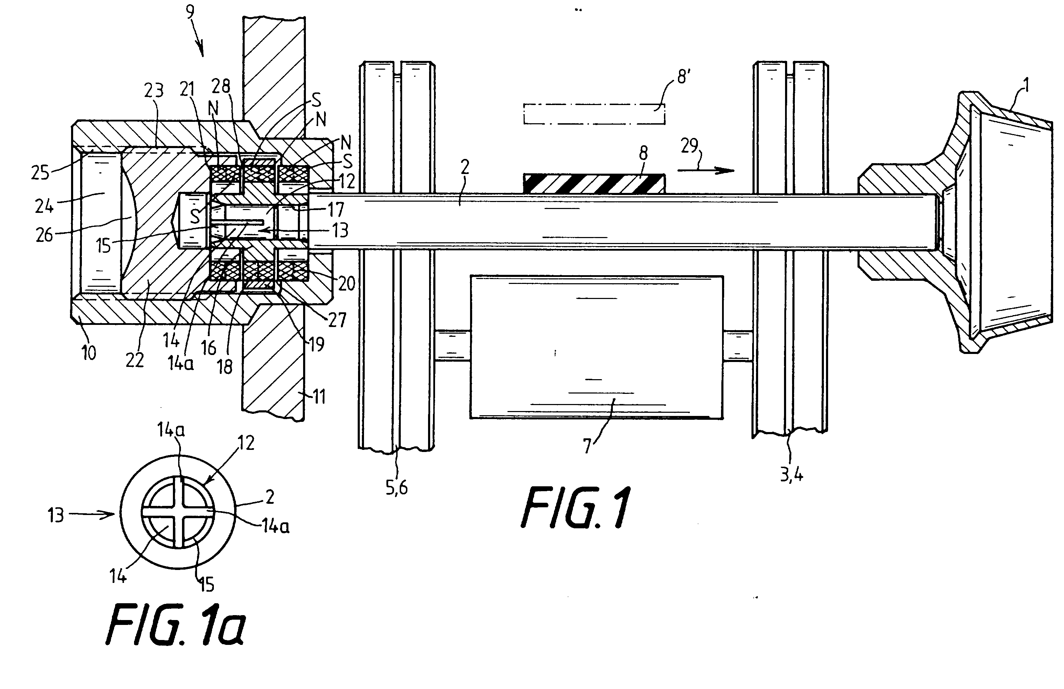

Das Ausführungsbeispiel nach Fig. 1 zeigt einen Offenend-Spinnrotor 1, der auf einem Schaft 2 befestigt ist. Dieser Schaft 2 wird radial von zwei Stützrollenpaaren 3, 4 sowie 5, 6, in den von den jeweiligen Stützrollenpaaren gebildeten Keilspalten gelagert. Die dem Betrachter zugewandten Stützrollen sind der Übersichtlichkeit halber weggelassen. Die Stützrollen 3 und 5 sowie 4 und 6 jeweils einer Seite besitzen ein gemeinsames Lagergehäuse, von denen das Lagergehäuse 7 der Stützrollen 3 und 5 in diesem Ausführungsbeispiel gezeigt ist. Dieses Lagergehäuse 7 ist in hier nicht näher dargestellter Weise an dem Spinnaggregat angeordnet. Angetrieben wird der Rotor über seinen Schaft 2 in bekannter Weise über einen Tangentialriemen 8, der zwischen den beiden Stützrollenpaaren auf dem Schaft aufliegt, ihn während des Betriebszustands in den Keilspalt drückt und somit radial sichert.

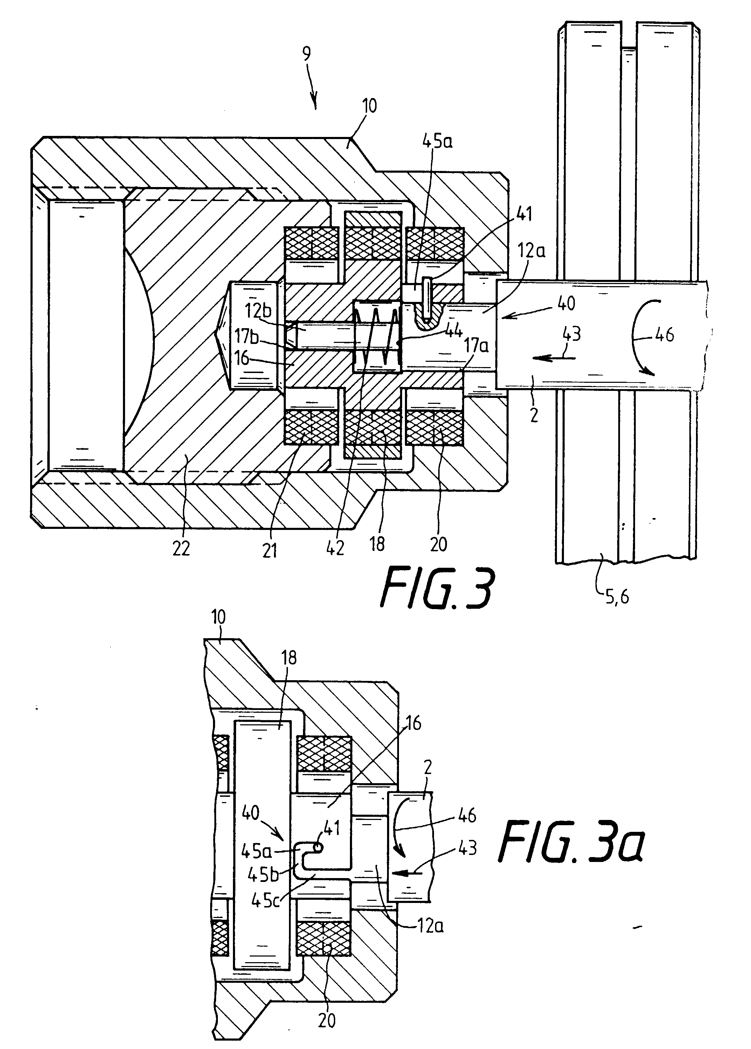

Die axiale Lagerung erfolgt in einem Magnetsystem, wie es beispielsweise in der Fig. 3 der DE-OS 26 39 763 dargestellt ist. Das Magnetsystem 9 ist in einem Gehäuse 10 untergebracht, welches wiederum in einer Wand 11 eines hier nicht näher dargestellten Spinnaggregats eingesetzt ist.

Der Schaft 2 ist mittels einer Klemmverbindung 13 als kraftschlüssige Verbindung mit dem ihm zugeordneten Magnet verbunden. Der Schaft 2 weist an seinem Ende einen verjüngten Ansatz 12 auf. Dieser ist in Längsrichtung geschlitzt, wie aus der Fig. 1a ersichtlich. Durch die Schlitze 14a wird der Schaft in vier Segmente 14 aufgeteilt. Im Endbereich laufen die Segmente 14 leicht konisch zu, 15, um ein Einführen in Bohrungen zu erleichtern.

Auf das verjüngte Ende 12 des Schaftes 2 ist eine Buchse 16 aufgeschoben. Ihre Bohrung 17 besitzt gegenüber dem Durchmesser des verjüngten Endes 12, insbesondere gegenüber den Segmenten 14, ein Übermaß. Dadurch entsteht beim Einschieben der Segmente 14 in die Bohrung 17 ein Klemmsitz. Die Wirkung dieses Klemmsitzes wird bei hohen Drehzahlen des Rotors noch dadurch erhöht, daß infolge der Fliehkraft die Klemmsegmente 14 radial nach außen gedrückt werden und sich dadurch mit einer erhöhten Kraft an die Wandung der Bohrung 17 anlegen.

Auf der Buchse 16 ist mittig ein ringförmiger Magnet 18 angeordnet, der durch einen Wuchtring 19 als Fliehkraftschutz gesichert wird.

Die Anordnung der Magnetpole N und S erfolgt in axialer Richtung. Dem auf dem Rotorschaft angeordneten Magnet ist jeweils in axialer Richtung im Gehäuse 10 des Magnetsystems 9 in Richtung des Rotors 1 ein Ringmagnet 20, dem Schaftende zugewandt ein Magnet 21 angeordnet. Während der Magnet 20 in der Gehäusewandung 10 eingepreßt ist, ist der Magnet 21 in einen Schraubeinsatz 22 mit Außengewinde 23 eingesetzt. Der Schraubeinsatz 22 ist in das Gehäuse 10 eingeschraubt. Dazu besitzt das Gehäuse auf dem Umfang seiner Innenbohrung 24 ein Gewinde 25. Mittels eines Schlitz 26 läßt sich der Schraubeinsatz innerhalb des Gehäuses 10 verdrehen. Damit ist es möglich, die Luftspalte zwischen den Magneten, den Luftspalt 27 zwischen den Magneten 18 und 20 sowie den Luftspalt 28 zwischen den Magneten 18 und 21, einzustellen. Durch das Einstellen der Luftspalte 27 und 28 wird auch die Verspannung des Lagers geändert. Je enger die Luftspalte sind, desto höher ist die Verspannung des Lagers, das heißt seine Steifigkeit.

Die Anordnung der Magnete ist jeweils so, daß sich gleichnamige Magnetpoole N,N und S,S gegenüberliegen. Dadurch werden die abstoßenden Kräfte über die Luftspalte wirksam.

Während bei dem Ausführungsbeispiel nach der DE-OS 26 39 763 erst eine Demontage des Lagers vorgenommen werden muß, um einen Rotor inklusive der Magnetlagerung auswechseln zu können, ist es nach der erfindungsgemäßen Vorrichtung möglich, den Rotor samt seinem Schaft aus dem Magnetsystem herauszuziehen. Dabei verbleibt das Magnetsystem ortsfest, das heißt, auch der mindestens eine auf dem Schaft des Rotors angeordnete Magnet verbleibt innerhalb des Magnetsystems. Nach Abheben des Tangentialriemens 8 in die Stellung 8' ist der Rotorschaft 2 aus dem Keilspalt zwischen den Stützrollenpaaren 3, 4 und 5, 6 in Pfeilrichtung 29 herausziehbar. Dabei wird durch Überwindung der Klemmkraft der Klemmsegmente 14 das verjüngte Ende 12 des Schaftes 2 aus der Bohrung 17 der Buchse 16 herausgezogen. Die Buchse 16 mit dem Magnet 18 verbleibt in dem Magnetsystem 9.

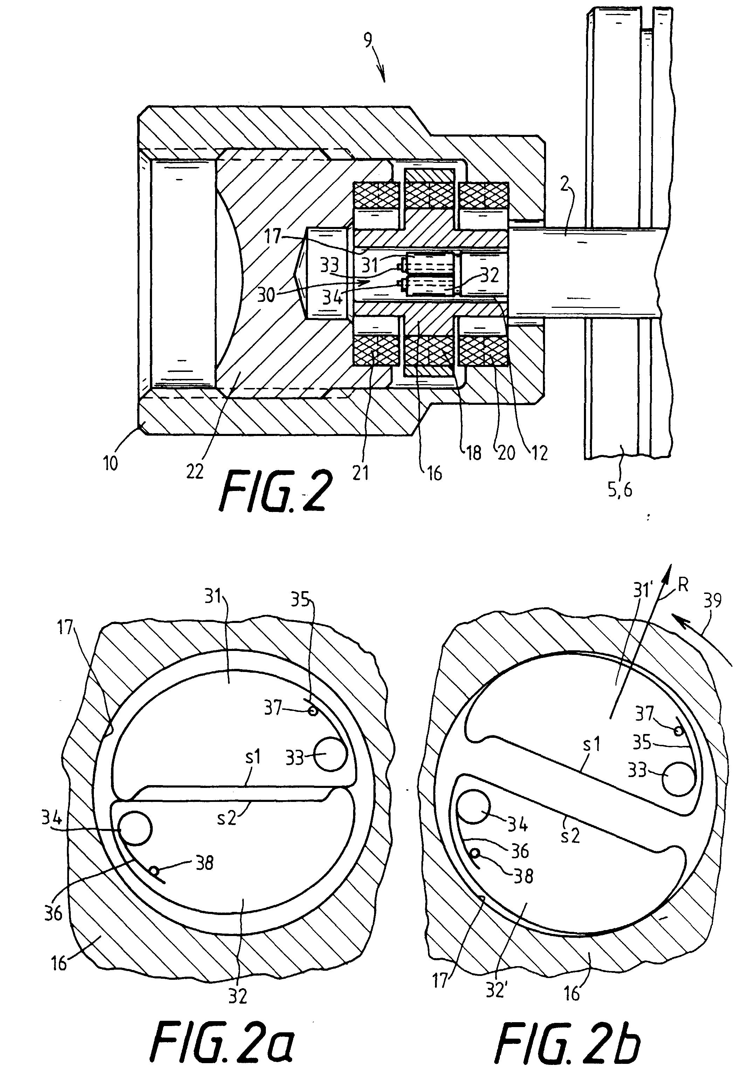

Ein weiteres Beispiel für eine lösbare kraftschlüssige Verbindung ist eine Fliehkraftkupplung, von der ein Ausführungsbeispiel in Fig. 2 dargestellt ist.

Die Anordnung der Magnete 18, 20 und 21 entspricht der Anordnung der Magnete entsprechend dem Ausführungsbeispiel nach Fig. 1. Das verjüngte Ende 12 des Schaftes 2, das in die Bohrung 17 der Buchse 16 hineinreicht, ist mit einer Fliehkraftkupplung 30 besetzt. In der Fig. 2a ist eine Frontansicht der Kupplung in unbetätigtem Zustand und in Fig. 2b eine Ansicht der Kupplung in betätigtem Zustand dargestellt.

An der Stirnseite des verjüngten Endes 12 des Schaftes 2 sind zwei Fliehkraftgewichte 31 und 32 angeordnet. Sie haben einen im wesentlichen halbkreisförmigen Querschnitt und liegen sich mit ihren Sekanten s1 beziehungsweise s2 gegenüber. Das Fliehkraftgewicht 31 ist exzentrisch um eine Achse 33 und das Fliehkraftgewicht 32 ist exzentrisch um eine Achse 34 drehbar gelagert. Mittels Federn 35 beziehungsweise 36, die jeweils einerseits auf den Achsen 33 beziehungsweise 34 gelagert sind und andererseits auf Stifte 37 beziehungsweise 38 drücken, die an den Fliehkraftgewichten 31 beziehungsweise 32 angeordnet sind, werden die Fliehkraftgewichte in Ruhestellung gehalten. In Ruhestelle ragen die Fliehkraftgewichte nicht über den Umfang des verjüngten Endes 12 des Schaftes 2 hinaus.

Wird nun der Rotorschaft 2 mittels des Tangentialriemens 8 angetrieben und erreicht er eine gewisse Drehzahl, wird die auf die Fliehkraftgewichte wirkende Radialkraft R so groß, daß sie nach außen gedrückt werden. In Fig. 2b ist mit dem Pfeil 39 die Rotationsrichtung des Schaftes 2 angegeben. Infolge der Radialkraft R und infolge der exzentrischen Lagerung der Fliehkraftgewichte werden diese gegen die Kraft der Federn 35 beziehungsweise 36 gegen die Wand der Bohrung 17 in der Buchse 16 gedrückt und nehmen aufgrund der Reibung die Buchse 16 in Drehrichtung 39 mit.

In Ruhestellung, wenn die Federn 35 beziehungsweise 36 die Fliehkraftgewichte 31 beziehungsweise 32 in Ruhestellung gedreht haben, läßt sich der Schaft 2 aus der Bohrung 17 der Buchse 16 herausziehen, so daß das Magnetsystem 9 in dem Spinnaggregat verbleibt.

Die vorgeschlagene Drehrichtung 39 und die Anordnung der Fliehkraftgewichte, wie sie in den Fig. 2a und 2b dargestellt ist, bewirkt eine Mitwirkung der Buchse 16 über die Reibkraft hinaus durch eine zusätzliche Klemmwirkung der Fliehkraftgewichte bei hohen Drehzahlen.

Das Ausführungsbespiel nach Fig. 3 zeigt eine formschlüssige lösbare Verbindung. Es ist ein Bajonettverschluß 40.

Das Ende des Schaftes 2 verjüngt sich in zwei Stufen 12a und 12b. Entsprechend abgestuft ist auch die Bohrung in der Buchse 16. Zur Aufnahme des Schaftendes 12a ist eine entsprechende Bohrung 17a vorgesehen, während eine Bohrung 17b das dünnere Ende 12b des Schaftes aufnimmt. Das Schaftende 12a trägt einen Stift 41. In der Bohrung 17a ist weiterhin eine Feder 42 angeordnet.

Das Ausführungsbeispiel zeigt den Rotorschaft in eingekuppeltem Zustand mit dem Magnet 18. Soll die Verbindung zu diesem Magnet gelöst werden, muß zunächst der Schaft 2 in Pfeilrichtung 43 verschoben werden. Dabei stößt die Stirnfläche 44 des verjüngten Endes 12a des Schaftes gegen die Feder 42 und drückt diese zusammen. Der Stift wird innerhalb des Schlitzes 45a (Fig. 3a) in der Buchse 16 verschoben, um dann durch Drehen des Schaftes 2 in Umfangsrichtung 46 im Verlauf 45b des Schlitzes geführt zu werden, bis daß er in den parallel zum Schaft 2 verlaufenden Schlitz 45c in die Ausstoßposition gelangt. In dieser Position wird durch den Druck der Feder 42 gegen die Stirnwand 44 des verjüngten Endes 12a des Schaftes 2 der Rotor 1 mitsamt seinem Schaft 2 aus dem Magnetlager herausgestoßen. Das Einsetzen eines neuen Rotors erfolgt durch Einführen des Stiftes in den Schlitz 45c und in umgekehrter Reihenfolge der Schritte, wie sie beim Lösen der Kupplung beschrieben worden sind.

In Fig. 3a ist eine Ansicht des Bajonettverschlusses 40 dargestellt.

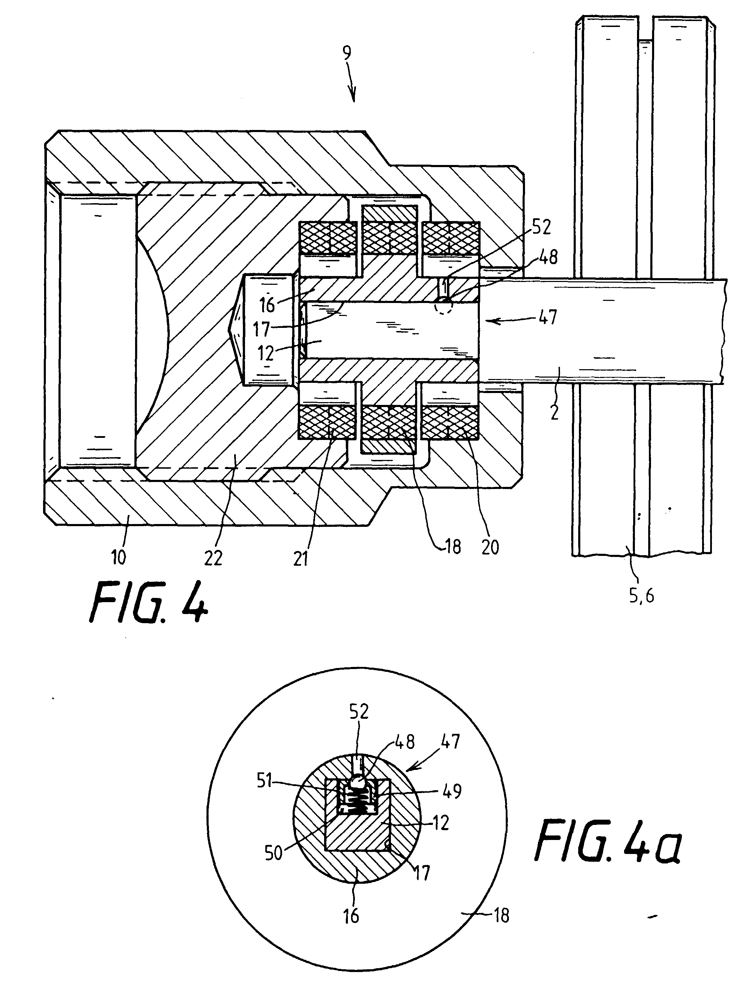

In Fig. 4 ist eine weitere Ausführung einer formschlüssigen lösbaren Verbindung 47 dargestellt. Das verjüngte Ende 12 des Schaftes 2 ist im vorliegenden Ausführungsbeispiel als Vierkant ausgebildet, wie die Fig. 4a zeigt. Andere Querschnittsformen, beispielsweise sechseckige, sind ebenfalls möglich. Entsprechend der Vierkantauführung des verjüngten Endes 12 des Schaftes 2 ist auch die Bohrung 17 in der Buchse 16 als Vierkantöffnung zur Aufnahme des verjüngten Schaftes 12 ausgebildet. Eine lösbare Verbindung zur Buchse 16 wird mittels einer Kugel 48 hergestellt. Sie ist mittels eines Käfigs 49 in eine Öffnung 50 des verjüngten Endes 12 des Schaftes 2 eingeschraubt und ragt über die Kontur des Querschnitts des verjüngten Schaftendes 12 hinaus. Mittels einer Feder 51 wird sie in dieser Stellung gehalten.

In der Buchse 16 befindet sich eine Bohrung 52. In diese rastet die Kugel 48 beim Einschieben des verjüngten Endes 12 des Schaftes 2 in die Vierkantöffnung 17 ein. Damit wird eine axiale Verschiebung bis zu einem bestimmten Kraftaufwand verhindert und damit eine lösbare Verbindung zum Magnet 18 und damit zum Magnetsystem 9 hergestellt. Über die Formgebung des verjüngten Endes 12 erfolgt die formschlüssige Verbindung mit dem Magnet 18.

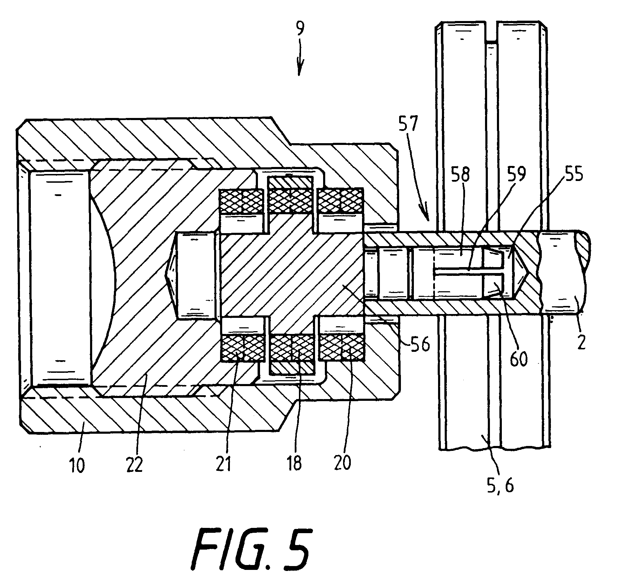

Fig. 5 zeigt ein Ausführungsbeispiel, in dem die die lösbare Verbindung herstellenden mechanischen Elemente an dem dem Rotorschaft zugeordneten Magnet angeordnet sind.

Das Ausführungsbeispiel nach Fig. 5 zeigt eine Umkehrung der Befestigungselemente entsprechend dem Ausführungsbeispiel nach Fig. 1. Außer bei der Fliehkraftkupplung sind die Befestigungselemente austauschbar entweder an dem jeweiligen, dem Schaft zugeordneten Magnet oder an dem Schaft anordbar.

Entsprechend Fig. 5 besitzt der Schaft 2 kein verjüngtes Ende 12 das in eine Bohrung der Buchse 16 eingreift, sondern der Schaft 2 besitzt am Ende eine Bohrung 55. Der Magnet 18 ist auch nicht auf einer Buchse angeordnet, sondern auf einem zylinderischen Körper 56, der als eine lösbare Verbindung 57 herstellende mechanische Elemente Klemmsegmente 58 trägt.

Entsprechend dem vorliegenden Ausführungsbeispiel besitzt die Bohrung 55 gegenüber den Klemmsegmenten 58 ein Übermaß, so daß beim Aufschieben des Rotorschaftes 2 mittels der Klemmsegmente 58 eine Klemmverbindung hergestellt wird. Die Ausführung der Klemmverbindung 57 ist mit der Ausführung vergleichbar, wie sie in der Fig. 1a dargestellt ist. Die Klemmsegmente 58 werden ebenfalls durch Schlitze 59 voneinander getrennt und die Anschrägung 60 der Stirnfläche erleichtert das Einschieben in die Bohrung 55 im Schaft 2.

Ausführungen, bei denen die die Verbindung herstellenden Elemente jeweils an den mindestens einen dem dem Rotorschaft zugeordneten Magnet angeordnet werden, vereinfachen die Herstellung eines Rotorschaftes. Dieser braucht nur noch die Aufnahmemittel, beispielsweise eine Bohrung mit der entsprechenden Kontur beziehungsweise eine Schlitzführung, aufzuweisen. Das ist einfacher und billiger in der Herstellung, denn die die Verbindung herstellenden Elemente verbleiben damit bei dem Magnet und brauchen nur noch für jede Spinnstelle einmal hergestellt zu werden. Bei den Schäften der auszuwechselnden Rotoren ist damit nur noch die einfacher herzustellende Aufnahmeöffnung vorzusehen.

## Patentansprüche

1. Lagerung für einen Offenend-Spinnrotor (1), dessen Schaft (2) radial in dem von mindestens einem Stützrollenpaar (3,4 ; 5,6) gebildeten Keilspalt und axial mittels eines Magnetsystems gelagert wird, wobei ein auf dem Schaft (2) angeordneter, sich radial vom Schaft aus erstreckender Magnet (18) von im Rotorgehäuse angeordneten, sich ebenfalls in radialer Richtung vom Schaft aus unter Bildung eines ringförmigen Luftspaltes erstreckenden Magneten (20,21), in axialer Richtung eingeschlossen ist, wobei sich jeweils gleichsinnige Magnetpole gegenüberliegen,
dadurch gekennzeichnet,
daß der auf dem Schaft (2) angeordnete Magnet (18) durch eine ausschließlich durch Axialschub lösbare Verbindung (13, 30, 40, 47, 57) auf dem Schaft (2) des Rotors (1) gehalten ist.

2. Lagerung nach Anspruch 1, dadurch gekennzeichnet, daß die die lösbare Verbindung herstellende Kupplung (13, 30, 40, 47, 57) zwischen dem Schaft (2) und dem dem Schaft (2) mindestens einen zugeordneten Magnet (18) im Bereich des Magnetsystems (9) liegt.

3. Lagerung nach Anspruch 1 oder 2, dadurch gekennzeichnet, daß die lösbare Verbindung zwischen dem Schaft (2) und dem ihm zugeordneten Magnet (18) eine kraftschlüssige Verbindung (13, 30, 57) ist.

4. Lagerung nach Anspruch 1 oder 2, dadurch gekennzeichnet, daß die lösbare Verbindung zwischen dem Schaft (2) und dem ihm zugeordneten Magnet (18) eine formschlüssige Verbindung (40, 47) ist.

5. Lagerung nach Anspruch 3, dadurch gekennzeichnet, daß die lösbare Verbindung eine Reibkupplung (13, 57) ist.

6. Lagerung nach Anspruch 3, dadurch gekennzeichnet, daß lösbare Verbindung eine Fliehkraftkupplung (30) ist.

7. Lagerung nach Anspruch 4, dadurch gekennzeichnet, daß die lösbare Verbindung ein Bajonettverschluß (40) ist.

8. Lagerung nach Anspruch 4, dadurch gekennzeichnet, daß die lösbare Verbindung eine Rastverbindung (47) ist.

9. Lagerung nach einem der Ansprüche 1 bis 8, dadurch gekennzeichnet, daß die die lösbare Verbindung (13, 40, 47, 57) herstellenden mechanischen Elemente (14, 41, 48, 58) an dem dem Rotorschaft (2) zugeordneten Magnet (18) angeordnet sind und daß beim Lösen der Verbindung zwischen Rotorschaft (2) und Magnet (18) diese mechanischen Elemente in dem Magnetsystem (9) verbleiben.

## Claims

1. Bearing for an open-end spinning rotor (1), the shaft (2) of which is mounted radially in the wedge-shaped space formed by at least one pair of support rollers (3, 4; 5, 6) and axially by means of a magnet system, wherein a magnet (18) arranged on the shaft (2), extending radially from the shaft is enclosed in axial direction by magnets (20, 21) arranged in the rotor housing also extending in radial direction from the shaft forming an annular air gap, wherein equipolar magnetic poles lie opposite one another respectively,
characterised in that
the magnet (18) arranged on the shaft (2) is held on the shaft (2) of the rotor (1) by a connection (13, 30, 40, 47, 57) that is detachable exclusively by means of axial thrust.

2. Bearing according to claim 1, characterised in that the coupling (13, 30, 40, 47, 57) forming the detachable connection between the shaft (2) and the at least one magnet (18) assigned to the shaft (2) is in the region of the magnet system (9).

3. Bearing according to claim 1 or 2, characterised in that the detachable connection between the shaft (2) and the magnet assigned thereto is a force-closed connection (13, 30, 57).

4. Bearing according to claim 1 or 2, characterised in that the detachable connection between the shaft (2) and the magnet (18) assigned thereto is a force-closed connection (40, 47).

5. Bearing according to claim 3, characterised in that the detachable connection is a friction coupling (13, 57).

6. Bearing according to claim 3, characterised in that the detachable connection is a centrifugal coupling (30).

7. Bearing according to claim 4, characterised in that the detachable connection is a bayonet lock (40).

8. Bearing according to claim 4, characterised in that the detachable connection is a lock connection (47).

9. Bearing according to one of claims 1 to 8, characterised in that the mechanical elements (14, 41, 48, 58) forming the detachable connection (13, 40, 47, 57) are arranged on the magnet (18) assigned to the rotor shaft (2), and in that on releasing the connection between the rotor shaft (2) and magnet (18) the said mechanical elements remain in the magnet system (9).

## Revendications

1. Palier pour un rotor de filage à bout libre (1), dont l'arbre (2) est placé radialement dans une fente en coin formée par au moins une paire de rouleaux d'appui (3, 4; 5, 6) et axialement au moyen d'un système d'aimants, un aimant (18) placé sur l'arbre (2) et s'étendant radialement à partir de l'arbre étant enfermé en direction axiale par des aimants (20, 21) placés dans le boîtier du rotor et s'étendant également en direction radiale depuis l'arbre en formant un espace d'air circulaire, les pôles magnétiques de même sens étant l'un en face de l'autre, **caractérisé en ce que** l'aimant (18) placé sur l'arbre (2) est maintenu sur l'arbre (2) du rotor (1) par un raccord (13, 30, 40, 47, 57) amovible exclusivement par poussée axiale.

2. Palier selon la revendication 1, **caractérisé en ce que** l'accouplement (13, 30, 40, 47, 57) établissant le raccord amovible se trouve entre l'arbre (2) et au moins un aimant (18) attribué à l'arbre (2) dans la partie du système d'aimant (9).

3. Palier selon la revendication 1 ou 2, **caractérisé en ce que** le raccord amovible entre l'arbre (2) et l'aimant (18) qui lui est adjoint est un raccord à transmission d'efforts (13, 30, 57).

4. Palier selon la revendication 1 ou 2, **caractérisé en ce que** le raccord amovible entre l'arbre (2) et l'aimant (18) qui lui est adjoint est un raccord à engagement positif (40, 47).

5. Palier selon la revendication 3, **caractérisé en ce que** le raccord amovible est un embrayage à friction (13, 57).

6. Palier selon la revendication 3, **caractérisé en ce que** le raccord amovible est un embrayage centrifuge (30).

7. Palier selon la revendication 4, **caractérisé en ce que** le raccord amovible est une fermeture à baïonnette (40).

8. Palier selon la revendication 4, **caractérisé en ce que** le raccord amovible est un raccord à cran d'arrêt (47).

9. Palier selon l'une des revendications 1 à 8, **caractérisé en ce que** les éléments mécaniques (14, 41, 48, 58) formant le raccord amovible (13, 40, 47, 57) sont placés sur l'aimant (18) attribué à l'arbre du rotor (2) et en ce que lors du desserrage du raccord entre l'arbre du rotor (2) et l'aimant (18), ces éléments mécaniques restent dans le système d'aimants (9).
